# EUROPEAN PATENT SPECIFICATION

(11) **EP 4 220 775 B1**
(45) Date of publication and mention of the grant of the patent: **30.09.2026**
(21) Application number: 23151954.7
(22) Date of filing: 17.01.2023
(51) Int. Cl.: H01M 4/62, H01M 4/133, H01M 4/134, H01M 4/36, H01M 4/38, H01M 4/583, C08F 8/44, C08F 220/06

(54) **NEGATIVE ELECTRODE FOR RECHARGEABLE LITHIUM BATTERY AND RECHARGEABLE LITHIUM BATTERY INCLUDING SAME**
NEGATIVE ELEKTRODE FÜR EINE WIEDERAUFLADBARE LITHIUMBATTERIE UND WIEDERAUFLADBARE LITHIUMBATTERIE DAMIT
ÉLECTRODE NÉGATIVE POUR BATTERIE AU LITHIUM RECHARGEABLE ET BATTERIE AU LITHIUM RECHARGEABLE LA COMPRENANT

(30) Priority: 20.01.2022 KR 20220008685
(43) Date of publication of application: 02.08.2023
(73) Proprietor: Samsung SDI Co., Ltd., Yongin-si, Gyeonggi-do 17084 (KR)
(72) Inventor: Jung, Kyunghwa, 17084 Yongin-si, Gyeonggi-do (KR); Cho, Yunshik, 17084 Yongin-si, Gyeonggi-do (KR); Oh, Seunghyun, 17084 Yongin-si, Gyeonggi-do (KR); Cho, Minho, 17084 Yongin-si, Gyeonggi-do (KR); Lee, Kukjoo, 17084 Yongin-si, Gyeonggi-do (KR); Lee, Jungmin, 17084 Yongin-si, Gyeonggi-do (KR)
(74) Representative: Gulde & Partner

(56) References cited:
- EP-A1- 3 678 239
- US-A1- 2014 272 574
- US-A1- 2017 040 612
- US-A1- 2020 075 934

## Description

### BACKGROUND OF THE INVENTION

### (a) Field of the Invention

The invention relates to a negative electrode for a rechargeable lithium battery and a rechargeable lithium battery including the same.

### (b) Description of the Related Art

Recently, with the development of technology and the increase in demand for automotive batteries, the need for silicon-containing negative active materials has emerged due to the demand for improved current density and higher capacity of rechargeable lithium batteries used in automobiles. In the case of such a negative active material, contraction and expansion of silicon occurred during charging and discharging cause the volume change of the electrode which separate between the active materials or the active material and a collector, so that the active material does not act as a function, thereby decreasing charge and discharge capacities.

Accordingly, there is necessary required to develop a binder for reducing expansion which inhibit breakage of the electrode structure caused during charge and discharge. Furthermore, there are actively investigated to develop batteries being capable of raid charging in order to improve the battery performances. Generally, the rapid charging causes to reduce the cycle-life of the battery, thereby reducing capacity. For solving these problems, there is necessary for materials and battery designs and among these, there is actively proceed to develop a low resistance binder for a negative electrode.

Conventional negative electrodes for a rechargeable lithium battery are disclosed by US 2014/272574 A1, US 2017/040612 A1 and EP 3 678 239 A1.

### SUMMARY OF THE INVENTION

The invention is defined by the appended claims.

One embodiment provides a negative electrode for a rechargeable lithium battery which may minimize the volume change of the negative electrode occurred during charge and discharge and reduce the resistance of the battery, thereby exhibiting excellent cycle-life characteristic and excellent power characteristic.

Another embodiment provides a rechargeable lithium battery including the negative electrode.

The present invention provides a negative electrode for a rechargeable lithium battery including a silicon-based negative active material and a binder, and the binder is an acryl-based copolymer, and the acryl-based copolymer includes an acrylic acid first monomer, an acrylonitrile second monomer and a (meth)acrylate third monomer, the acrylic acid first monomer includes acrylic acid substituted with a lithium ion, the (meth)acrylate third monomer includes an ethylene glycol group, and a weight-average molecular weight (Mw) of the third monomer is less than about 900 g/mol.

The weight-average molecular weight (Mw) of the (meth)acrylate third monomer is 300 g/mol to 600 g/mol.

The acrylic acid substituted with the lithium ion has a degree of substitution of a lithium ion (Li/AA) of 40 mol% to 80 mol%.

A weight ratio of the first monomer, the second monomer and the third monomer is 60 to 25:40:5 to 35 by weight ratio.

An amount of the third monomer may be about 5 wt% to about 30 wt% based on the total, 100 wt%, of the first monomer, the second monomer, and the third monomer.

The (meth)acrylate third monomer may be a polyethylene glycol methyl ether methacrylate monomer.

The silicon-based active material may include silicon and carbon.

According to another embodiment, a rechargeable lithium battery including the negative electrode, a positive electrode, and an electrolyte, is provided.

The negative electrode according to one embodiment may exhibit excellent cycle-life characteristics and excellent high-rate charge and discharge characteristics.

### BRIEF DESCRIPTION OF THE DRAWING

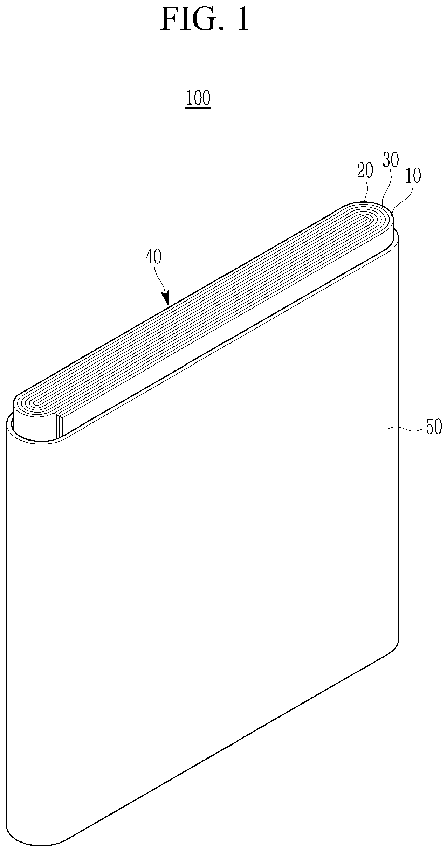

FIG. 1 is a schematic diagram showing a rechargeable lithium battery according to one embodiment.

### DETAILED DESCRIPTION OF THE INVENTION

Hereinafter, embodiments of the present invention are described in detail. However, these embodiments are merely examples, the present invention is not limited thereto, and the present invention is defined by the scope of claims.

In the specification, when a definition is not otherwise provided, such a particle diameter (D50) indicates an average particle diameter (D50) where a cumulative volume is about 50 volume% in a particle distribution.

The average particle size (D50) may be measured by a method well known to those skilled in the art, for example, by a particle size analyzer, or also by a transmission electron microscopic image or a scanning electron microscopic image. Alternatively, a dynamic light-scattering measurement device is used to perform a data analysis, and the number of particles is counted for each particle size range. From this, the average particle diameter (D50) value may be easily obtained through a calculation.

A negative electrode for a rechargeable lithium battery includes a silicon-based negative active material and a binder (in a negative active material layer being disposed on a current collector). The binder is an acryl-based copolymer is obtained by copolymerization of an acrylic acid first monomer, an acrylonitrile second monomer and a (meth)acrylate third monomer. In other words, the acryl-based copolymer includes monomer units derived from an acrylic acid as a first monomer, an acrylonitrile as a second monomer and a (meth)acrylate as a third monomer.

The "(meth)" may include a methyl group, or does not include a methyl group. For example, (meth)acrylate may be an acrylate or may be a methacrylate.

The carboxylic acid group derived from the first monomer in the acryl-based copolymer is partially present as a lithium salt. The acrylic acid derived monomer units in the acryl-based copolymer thus partially include lithium ions. In other words, some of the "-COOH" groups of these monomer units are substituted by "-COOLi" groups.

The inclusion of the acrylic acid substituted with the lithium ions may reduce electrical resistance.

A degree of substitution of the carboxylic acid groups derived from the acrylic acid first monomer in the acryl-based copolymer by its lithium salts is adjusted to 40 mol% to 80 mol% of the acrylic acid first monomer used for copolymerization. Thus, 40% to 80% of the carboxylic acid groups are present in the acryl-based polymer as lithium salt. In other words, the acrylic acid may include acrylic acid substituted with the lithium ions at an amount of 40 mol% to 80 mol% based on the total, 100 mol%, of the acrylic acid. That is, the acrylic acid substituted with the lithium ions may have a substitution degree of lithium ions (Li/AA) of 40 mol% to 80 mol%. When the acrylic acid substituted with the lithium ions is included at this range of mol%, the reduction in resistance may be further improved.

If it is an element belonging to Group 1 of the Periodic Table, if it includes acrylic acid substituted with, for example, sodium ions, rather than lithium ions, it is not desired, as the effect for reducing resistance is not significant.

The (meth)acrylate third monomer includes an ethylene glycol group, and a weight-average molecular weight (Mw) of the third monomer 300 g/mol to 600 g/mol. When the weight-average molecular weight (Mw) of the (meth)acrylate third monomer is less than 900 g/mol, fluidity is good, thereby reducing resistance and improving movement of lithium. The weight-average molecular mass can be determined by, for example, static light scattering.

For example, such a (meth)acrylate monomer including an ethylene glycol group may be polyethylene glycol methylether methacrylate.

A weight ratio of the acrylic acid first monomer, the acrylonitrile second monomer and the (meth)acrylate third monomer is 60 to 25:40:5 to 35 by weight ratio, or may be 55 to 30:40:5 to 30 by weight ratio.

An amount of the first monomer may be 25 wt% to 60 wt% based on the total, 100 wt%, of the first monomer, the second monomer, and the third monomer. Furthermore, an amount of the second monomer may be 30 wt% to 50 wt% based on 100 wt% of the first monomer, the second monomer, and the third monomer.

When the weight ratio of the first monomer, the second monomer, and the third monomer, or the amounts of the first monomer and the second monomer are within the range, the obtained copolymer may have suitable water-solubility, so that the processability of the negative electrode preparation using the copolymer may be secured and the resistance of the negative electrode may be effectively reduced.

An amount of the third monomer may be 5 wt% to 30 wt%, or 5 wt% to 20 wt%, based on the total, 100 wt%, of the first monomer, the second monomer, and the third monomer. In the copolymer, when the amount of the third monomer is satisfied in the range, the cycle-life and power characteristics may be further improved.

Such a copolymer according to one embodiment may be prepared by copolymerizing acrylic acid, acrylonitrile, and a (meth)acrylate monomer, and the copolymerization may be any techniques well-known in the related arts.

The binder is used together with the silicon-based negative active material. This is because the silicon-based negative active material renders to improve current density and increase capacity, but the silicon-based negative active material has severe volume expansion during charge and discharge compared to a carbon-based active material. That is, the binder may effectively suppress the volume expansion, so that it may effectively suppress the severe volume expansion of the silicon-based negative active material.

In one embodiment, the silicon-based negative active material may include silicon and carbon. The carbon may be crystalline carbon or amorphous carbon. The crystalline carbon may be natural graphite, artificial graphite, or a combination thereof. The amorphous carbon may be soft carbon, hard carbon, mesophase pitch carbide, sintered cokes, or a combination thereof.

The silicon-based negative active material may include a silicon-based material and amorphous carbon, or may include crystalline carbon, a silicon-based material, and amorphous carbon. Herein, the silicon-based material may be silicon (Si) or a silicon oxide (SiOₓ, 0 < x < 2).

When the silicon-based negative active material includes the silicon-based material and amorphous carbon, it may be an agglomerated product of the silicon-based material and amorphous carbon, or a silicon-based material coated with amorphous carbon. Herein, a mixing ratio of the silicon-based material and amorphous carbon may be about 1:99 to about 60:40 by weight ratio.

Alternatively, if the silicon-based negative active material includes crystalline carbon, a silicon-based material and amorphous carbon, it may be an aggregate of aggregating the crystalline carbon and the silicon-based material, coated with an amorphous carbon. Herein, an amount of the silicon-based material may be 1 wt% to 60 wt%, according to one embodiment, 3 wt% to 60 wt% based on 100 wt% of the total silicon-based negative active material. In the silicon-based negative active material, an amount of the amorphous carbon may be 20 wt% to 60 wt% based on 100 wt% of the silicon-based negative active material, and an amount of the crystalline carbon may be 20 wt% to 60 wt% based on 100 wt% of the silicon-based negative active material.

In the negative electrode according to one embodiment, the negative active material may further include a carbon-based negative active material, together with the silicon-based negative active material. When the silicon-based negative active material is used together with the carbon-based negative active material, a mixing ratio of the silicon-based negative active material and the carbon-based negative active material may be 1:99 to 50:50 by weight ratio. More specifically, a mixing ratio of the silicon-based negative active material and the carbon-based negative active material may be 5:95 to 20:80 by weight ratio.

The carbon-based negative active material may be graphite such as unspecified shaped, sheet shaped, flake shaped, spherical shaped, or fiber shaped natural graphite or artificial graphite, and the amorphous carbon may be soft carbon, hard carbon, mesophase pitch carbide, sintered cokes, and the like.

The negative electrode according to one embodiment includes the negative active material layer including the negative active material and a binder, and a current collector supported thereon.

The negative active material layer may further include a conductive material.

In the negative active material layer, an amount of the negative active material may be 95 wt% to 98 wt% based on the negative active material layer. An amount of the binder may be 1 wt% to 5 wt% based on the total, 100 wt%, of the negative active material layer. An amount of the conductive material may be 1 wt% to 5 wt% based on the total, 100 wt%, of the negative active material layer.

As the binder, the binder according to one embodiment is a first binder and an aqueous binder may be further included as a second binder together with the first binder. Even though the binder includes the first binder and the second binder, a total amount of the binder may be 1 wt% to 5 wt% based on the total, 100 wt%, of the negative active material layer. If the binder includes the first binder and the second binder, a mixing ratio of the first binder and the second binder may be 70:30 to 40:60 by weight ratio. When the mixing ratio of the first binder and the second binder is within the range, the negative electrode having excellent flexibility adherence may be prepared.

The aqueous binder may be a styrene-butadiene rubber (SBR), an acrylated styrene-butadiene rubber (ABR), an acrylonitrile-butadiene rubber, an acryl rubber, a butyl rubber, or a combination thereof.

The conductive material is included to provide electrode conductivity, and any electrically conductive material may be used as a conductive material unless it causes a chemical change. Examples of the conductive material include: a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

Another embodiment provides a rechargeable lithium battery including the negative electrode, a positive electrode, and an electrolyte.

The positive electrode may include a current collector and a positive active material layer formed on the current collector.

The positive electrode active material may include lithiated intercalation compounds that reversibly intercalate and deintercalate lithium ions. Specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D₂ (0.90 ≤ a ≤1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}XₓD_{α} (0.90 ≤ a ≤ 1.8, 0 ≤ b ≤ 0.5, 0 ≤ c ≤ 0.5, 0 < α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤0.5, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤0.5, 0 < α < 2); LiₐNi_{1-b-c}Mn_{b}X_{c}D_{α} (0.90 ≤a ≤1.8, 0 ≤ b ≤ 0.5, 0 ≤ c ≤ 0.5, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.5, 0 < α < 2); LiₐNi_{b}E_{c}G_{d}O₂ (0.90 ≤ a ≤ 1.8, 0 ≤ b ≤ 0.9, 0 ≤ c ≤0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNi_{b}Co_{c}Al_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li _{(3-f)}J₂(PO₄)₃ (0 ≤ f ≤ 2); Li _{(3-f)}Fe₂(PO₄)₃ (0 ≤ f ≤ 2); LiₐFePO₄ (0.90 ≤ a ≤ 1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In an embodiment of the present invention, the positive active material layer may further include a binder and a conductive material. Herein, the binder and the conductive material may be included in an amount of about 1 wt% to about 5 wt%, respectively, based on the total amount of the positive active material layer.

The binder improves binding properties of positive electrode active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material include: a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use aluminum foil, nickel foil, or a combination thereof, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may include cyclohexanone and the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance and it may be well known to one in related art.

Furthermore, the carbonate-based solvent may desirably include a mixture with a cyclic carbonate and a linear carbonate. The cyclic carbonate and the linear carbonate are mixed together in a volume ratio of about 1:1 to about 1:9, and when the mixture is used as an electrolyte, it may have enhanced performance.

The organic solvent may further include an aromatic hydrocarbon-based solvent as well as the carbonate-based solvent. The carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

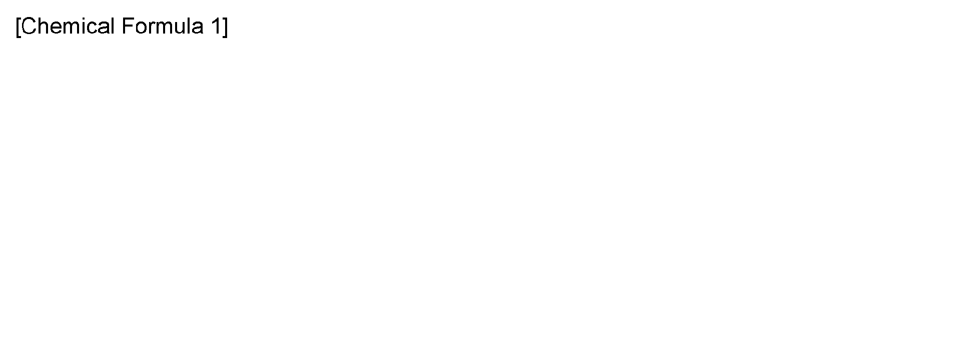

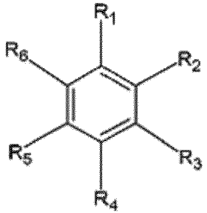

In Chemical Formula 1, R₁ to R₆ are the same or different, and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinyl ethyl carbonate, vinylene carbonate, or an ethylene carbonate-based compound represented by Chemical Formula 2, as an additive for improving cycle life.

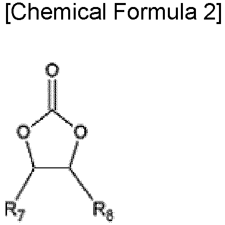

In Chemical Formula 2, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate, and the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salts selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer of about 1 to about 20), lithium difluoro(bisoxolato) phosphate), LiCl, Lil, LiB(C₂O₄)₂ (lithium bis(oxalato) borate: LiBOB) and lithium difluoro(oxalato)borate (LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride, or multi-layers thereof having two or more layers, and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 1 is an exploded perspective view of a rechargeable lithium battery according to an embodiment. The rechargeable lithium battery according to an embodiment is illustrated as a prismatic battery but is not limited thereto, and may include variously-shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

### (Example 1)

An acrylic acid (AA) first monomer, an acrylonitrile (AN) second monomer, a polyethylene glycol methyl ether methacrylate (PEGMA, weight-average molecular weight (Mw)=300 g/mol) third monomer were added to a reactor in order to have an amount of 45 wt%, 40 wt%, and 15 wt%, and a VA-086 initiator (Wako Pure Chemical Industries Ltd), an AR-1025 emulsifier (DKS Co. Ltd.), and water were added to the reactor to occur a copolymerization reaction.

Lithium hydroxide was added to the resulting copolymerization reaction product and agitated to prepare a binder aqueous solution including a copolymer of an acrylic acid first monomer, an acrylonitrile second monomer, and a PEGMA third monomer. Herein, an used amount of lithium hydroxide was adjusted to substitute 60 mol% of the acrylic acid first monomer with lithium ions, and thus the resulting product was prepared as a copolymer binder including lithium polyacrylate in which 60 mol% of an acrylic group included in the acrylic acid first monomer was substituted with lithium ions.

The binder aqueous solution had viscosity of 2670 cps at 25 °C based on 6 wt% of a solid content. The viscosity was measured using a Brookfield Viscometer with LV4 Spindle at 30 rpm and a room temperature (25°C).

97.4 wt% of a negative active material, 1.2 wt% of the binder aqueous solution, and 1.4 wt% of styrene-butadiene rubber were mixed to prepare a negative active material slurry. The negative active material was used as a mixed active material of a blending of artificial /natural graphite and a silicon-carbon composite (mixing ratio of 90:10 by weight). Herein, the silicon-carbon composite included an agglomerated product in which artificial graphite and silicon nanoparticles are agglomerated and a soft carbon coating layer on the surface of the agglomerated product. In addition, an amount of artificial graphite was 40 wt%, an amount of the silicon nanoparticles was 40 wt%, and an amount of the soft carbon was 20 wt% based on the total weight of the silicon-carbon composite.

The negative active material slurry was coated on a copper current collector and dried followed by pressing to prepare a negative electrode.

### (Example 2)

A binder aqueous solution having viscosity of 2740 cps at 25 °C based on 6 wt% of a solid content was prepared by the same procedure as in Example 1, except that a PEGMA third monomer having a weight-average molecular weight (Mw) of 500 g/mol was used as the PEGMA third monomer.

Using the binder aqueous solution, a negative electrode was prepared by the same procedure as in Example 1.

### (Comparative Example 1)

A binder aqueous solution having viscosity of 2620 cps at 25 °C based on 6 wt% of a solid content was prepared by the same procedure as in Example 1, except that a PEGMA third monomer having a weight-average molecular weight (Mw) of 900 g/mol was used as the PEGMA third monomer.

Using the binder aqueous solution, a negative electrode was prepared by the same procedure as in Example 1.

### (Comparative Example 2)

A binder aqueous solution having viscosity of 2690 cps at 25 °C based on 6 wt% of a solid content was prepared by the same procedure as in Example 1, except that a PEGMA third monomer having a weight-average molecular weight (Mw) of 1500 g/mol was used as the PEGMA third monomer.

Using the binder aqueous solution, a negative electrode was prepared by the same procedure as in Example 1.

### (Example 3)

A binder aqueous solution having viscosity of 2600 cps at 25 °C based on 6 wt% of a solid content was prepared by the same procedure as in Example 2, except that an amount of lithium hydroxide was used to adjust in order to substitute 40 mol% of the acrylic acid first monomer with lithium ions.

Using the binder aqueous solution, a negative electrode was prepared by the same procedure as in Example 1.

### (Example 4)

A binder aqueous solution having viscosity of 2690 cps at 25 °C based on 6 wt% of a solid content was prepared by the same procedure as in Example 2, except that an amount of lithium hydroxide was used to adjust in order to substitute 80 mol% of the acrylic acid first monomer with lithium ions.

Using the binder aqueous solution, a negative electrode was prepared by the same procedure as in Example 1.

### (Comparative Example 3)

A binder aqueous solution was prepared by the same procedure as in Example 2, except that an amount of lithium hydroxide was used to adjust in order to substitute 30 mol% of the acrylic acid first monomer with lithium ions. As the prepared binder solution was non-water-soluble, it was impossible to measure the viscosity, and thus the subsequent experiments were not performed.

### (Comparative Example 4)

A binder aqueous solution having viscosity of 2750 cps at 25 °C based on 6 wt% of a solid content was prepared by the same procedure as in Example 2, except that an amount of lithium hydroxide was used to adjust in order to substitute 90 mol% of the acrylic acid first monomer with lithium ions.

Using the binder aqueous solution, a negative electrode was prepared by the same procedure as in Example 1.

### (Example 5)

A binder aqueous solution having viscosity of 2850 cps at 25 °C based on 6 wt% of a solid content was prepared by the same procedure as in Example 2, except that an acrylic acid (AA) first monomer, an acrylonitrile (AN) second monomer, and a PEGMA (weight-average molecular weight (Mw) = 500 g/mol) third monomer were used in order to have an amount of 55 wt%, 40 wt%, and 5 wt%.

Using the binder aqueous solution, a negative electrode was prepared by the same procedure as in Example 1.

### (Example 6)

A binder aqueous solution having viscosity of 2260 cps at 25 °C based on 6 wt% of a solid content was prepared by the same procedure as in Example 2, except that an acrylic acid (AA) first monomer, an acrylonitrile (AN) second monomer, and a PEGMA (weight-average molecular weight (Mw) = 500 g/mol) third monomer, were used in order to have an amount of 30 wt%, 40 wt%, and 30 wt%.

Using the binder aqueous solution, a negative electrode was prepared by the same procedure as in Example 1.

### (Comparative Example 5)

A binder aqueous solution having viscosity of 2820 cps at 25 °C based on 6 wt% of a solid content was prepared by the same procedure as in Example 2, except that an acrylic acid (AA) first monomer, an acrylonitrile (AN) second monomer, and a PEGMA (weight-average molecular weight (Mw) =500 g/mol) third monomer were used in order to have an amount of 60 wt%, 40 wt%, and 0 wt%.

Using the binder aqueous solution, a negative electrode was prepared by the same procedure as in Example 1.

### (Reference Example 1)

A binder aqueous solution having viscosity of 1990 cps at 25 °C based on 6 wt% of a solid content was prepared by the same procedure as in Example 2, except that an acrylic acid (AA) first monomer, an acrylonitrile (AN) second monomer, and a PEGMA (weight-average molecular weight (Mw) = 500 g/mol) third monomer were used in order to have an amount of 20 wt%, 40 wt%, and 40 wt%.

Using the binder aqueous solution, a negative electrode was prepared by the same procedure as in Example 1.

### (Comparative Example 6)

Sodium hydroxide was added to the copolymerization reaction product according to Example 1 and agitated to prepare a binder aqueous solution including a copolymer of an acrylic acid first monomer, an acrylonitrile second monomer, and a PEGMA third monomer. Herein, a used amount of sodium hydroxide was adjusted to substitute 60 mol% of the acrylic acid first monomer with sodium ions, and thus, the resulting product was prepared as a copolymer binder including sodium polyacrylate in which 60 mol% of an acrylic group included in the acrylic acid first monomer was substituted with sodium ions.

Using the binder aqueous solution, a negative electrode was prepared by the same procedure as in Example 1.

### (Comparative Example 7)

97.7 wt% of the negative active material used in Example 1, 1.4 wt% of a styrene butadiene rubber binder, and 0.9 wt% of a carboxymethyl cellulose thickener were mixed in a water solvent to prepare a negative active material slurry.

The negative active material slurry was coated on a copper current collector and dried followed by pressing to prepare a negative electrode.

### (Preparation Example) Fabrication of a half-cell

Using each negative electrode of Examples 1 to 6, Comparative Examples 1 to 7, and Reference Example 1, a lithium metal counter electrode, and an electrolyte, a coin-type half-cell was fabricated. As the electrolyte, 1.5 M LiPF₆ dissolved ethylene carbonate, ethylmethyl carbonate, and dimethyl carbonate (20:10:70 volume ratio) was used.

### Experimental Example 1) Evaluation of expansion ratio of negative electrode

The half-cell was standard charged and discharged at 0.1C once. A ratio of thickness of the negative electrode after the standard charge and discharge to a thickness of the negative electrode before the standard charge and discharge was measured. The results are shown in Table 1, as an expansion ratio of the negative electrode.

### Experimental Example 2) Evaluation of specific resistance of negative electrode

Specific resistances of the negative electrodes of Examples 1 to 6, Comparative Examples 1 to 7, and Reference Example 1 were measured by a resistance meter available from HIOKI, Co. Ltd. (resistance value passed in the vertical direction of negative electrode, through a plane). The results are shown in Table 1.

### Experimental Example 3) Evaluation of lithium deposition amount

The half-cell was charged and discharged at 0.2 C once, and then disassembled to separate the negative electrode. In the separated negative electrode, an amount of the deposited lithium was obtained by using an inductively coupled plasma mass analysis device (ICP-MS). The lithium deposition amount was calculated as a percentage value based on 100 wt% of the negative active material. The results are shown in Table 1.

### Experimental Example 4) Evaluation of cycle-life

The half-cell was charged and discharged at 0.33 C under room temperature of 25 °C for 100 cycles. A ratio of the 100^{th} discharge capacity to the 1^{st} discharge capacity was obtained. The results are shown in Table 1, as capacity retention.

**Table 1**

| | Negative electrode expansion ratio (%) | Negative electrode specific resistance (Ωm) | Li deposition amount (%) | Capacity retention (%) |
|---|---|---|---|---|
| Example 1 | 12.8 | 0.22 | 0.81 | 86 |
| Example 2 | 12.9 | 0.21 | 0.79 | 88 |
| Comparative Example 1 | 12.9 | 0.23 | 0.84 | 84 |
| Comparative Example 2 | 12.8 | 0.26 | 1.05 | 82 |
| Example 3 | 13.6 | 0.23 | 0.81 | 86 |
| Example 4 | 12.9 | 0.20 | 0.76 | 87 |
| Comparative Example 3 | non-water-soluble | - | - | - |
| Comparative Example 4 | 13.5 | 0.23 | 0.83 | 83.7 |
| Example 5 | 12.7 | 0.23 | 0.84 | 86 |
| Example 6 | 13.8 | 0.16 | 0.74 | 86 |
| Comparative Example 5 | 12.6 | 0.26 | 1.10 | 81 |
| Reference Example 1 | 16.4 | 0.14 | 0.71 | 77 |
| Comparative Example 6 | 12.9 | 0.28 | 1.35 | 82 |
| Comparative Example 7 | 15.1 | 0.26 | 1.12 | 78 |

As shown in Table 1, the negative electrode including the binder of Examples 1 to 6 maintained an expansion ratio of the negative electrode, slightly decreased specific resistance and lithium deposition amount, and surprisingly improved capacity retention.

Whereas, Comparative Example 1 including the binder using the third monomer having a weight-average molecular weight (Mw) of 900 g/mol, exhibited a high lithium deposition amount and low capacity retention. In addition, Comparative Example 2 including the binder using the third monomer having a weight-average molecular weight (Mw) of 1500 g/mol, exhibited high specific resistance, a very high lithium deposition amount, and significantly low capacity retention.

Comparative Example 4 using the binder having a high substitution degree of lithium ions of 90 mol% exhibited high negative electrode specific resistance, a high lithium deposition amount, and low capacity retention.

Comparative Example 5 including the binder without the third monomer, and Comparative Example 6 using the binder substituted with sodium ions, rather than lithium ions, exhibited an excessively high negative electrode specific resistance and an excessively high lithium deposition amount and significantly deteriorated capacity retention.

Comparative Example 7 using the styrene butadiene rubber binder, rather than the copolymer binder exhibited high negative electrode specific resistance, a high lithium deposition amount, and very deteriorated capacity retention.

Reference Example 1 in which the used amount of the first monomer was low at 20 wt%, exhibited low specific resistance and a low lithium deposition amount, but excessively deteriorated capacity retention.

In addition, even with charge and discharge for 100 cycles as shown in Table 1, the capacity retention of Examples 1 to 6 exhibited higher than Comparative Examples 1 to 7, so that it can be expected that the long cycle-life, for example, capacity retention after charge and discharge for 500 cycles in examples is significantly improved compared to the comparative examples.

## Claims

1. A negative electrode (20) for a rechargeable lithium battery (100), comprising:
a silicon-based negative active material; and
a binder,
wherein the binder is an acryl-based copolymer, and the acryl-based copolymer comprises an acrylic acid first monomer, an acrylonitrile second monomer, and a (meth)acrylate third monomer, wherein a weight ratio of the first monomer, the second monomer and the third monomer is 60 to 25:40:5 to 35 by weight ratio,
wherein the carboxylic acid group derived from the acrylic acid first monomer in the acryl-based copolymer is partially present as a lithium salt and a degree of substitution of the carboxylic acid groups derived from the acrylic acid first monomer in the acryl-based copolymer by its lithium salts is adjusted to 40 mol% to 80 mol% of the acrylic acid first monomer,
the (meth)acrylate third monomer comprises an ethylene glycol group and has a weight-average molecular weight (Mw) of 300 g/mol to 600 g/mol, wherein the weight-average molecular weight (Mw) is determined by static light scattering.

2. The negative electrode for the rechargeable lithium battery of claim 1, wherein an amount of the third monomer is 5 wt% to 30 wt% based on the total, 100 wt% of the first monomer, the second monomer, and the third monomer.

3. The negative electrode for the rechargeable lithium battery of any one of the preceding claims, wherein the (meth)acrylate third monomer is a polyethylene glycol methyl ether methacrylate monomer.

4. The negative electrode for the rechargeable lithium battery of any one of the preceding claims, wherein the silicon-based negative active material comprises silicon and carbon.

5. A rechargeable lithium battery (100), comprising:
a negative electrode (20) of any one of the preceding claims;
a positive electrode (10); and
an electrolyte.

## Patentansprüche

1. Negative Elektrode (20) für eine wiederaufladbare Lithiumbatterie (100), umfassend:
ein negatives Aktivmaterial auf Siliziumbasis; und
ein Bindemittel,
wobei das Bindemittel ein Copolymer auf Acrylbasis ist und das Copolymer auf Acrylbasis ein erstes Acrylsäure-Monomer, ein zweites Acrylnitril-Monomer und ein drittes (Meth)acrylat-Monomer umfasst, wobei ein Gewichtsverhältnis des ersten Monomers, des zweiten Monomers und des dritten Monomers 60 zu 25:40:5 bis 35 im Gewichtsverhältnis beträgt,
wobei die vom ersten Acrylsäure-Monomer abgeleitete Carbonsäuregruppe in dem Copolymer auf Acrylbasis teilweise als Lithiumsalz vorliegt und der Substitutionsgrad der vom ersten Acrylsäure-Monomer abgeleiteten Carbonsäuregruppen in dem Copolymer auf Acrylbasis durch deren Lithiumsalze auf 40 Mol-% bis 80 Mol-% des ersten Acrylsäure-Monomers eingestellt ist,
das dritte (Meth)acrylat-Monomer eine Ethylenglykolgruppe umfasst und ein gewichtsmittleres Molekulargewicht (Mw) von 300 g/mol bis 600 g/mol aufweist, wobei das gewichtsmittlere Molekulargewicht (Mw) durch statische Lichtstreuung bestimmt wird.

2. Negative Elektrode für die wiederaufladbare Lithiumbatterie nach Anspruch 1, wobei die Menge des dritten Monomers 5 Gew.-% bis 30 Gew.-%, bezogen auf die Gesamtmenge von 100 Gew.-% des ersten Monomers, des zweiten Monomers und des dritten Monomers, beträgt.

3. Negative Elektrode für die wiederaufladbare Lithiumbatterie nach einem der vorstehenden Ansprüche, wobei das dritte (Meth)acrylat-Monomer ein Polyethylenglykolmethylethermethacrylat-Monomer ist.

4. Negative Elektrode für die wiederaufladbare Lithiumbatterie nach einem der vorstehenden Ansprüche, wobei das negative Aktivmaterial auf Siliziumbasis Silizium und Kohlenstoff umfasst.

5. Wiederaufladbare Lithiumbatterie (100), umfassend:
eine negative Elektrode (20) nach einem der vorstehenden Ansprüche;
eine positive Elektrode (10); und
einen Elektrolyten.

## Revendications

1. Électrode négative (20) pour une batterie au lithium rechargeable (100), comportant :
un matériau actif négatif à base de silicium ; et
un liant,
dans laquelle le liant est un copolymère à base d'acrylique, et le copolymère à base d'acrylique comporte un premier monomère d'acide acrylique, un deuxième monomère d'acrylonitrile et un troisième monomère de (méth)acrylate, dans laquelle un rapport pondéral du premier monomère, du deuxième monomère et du troisième monomère est de 60 à 25:40:5 à 35 en rapport pondéral,
dans laquelle le groupe acide carboxylique dérivé du premier monomère d'acide acrylique dans le copolymère à base d'acrylique est partiellement présent en tant que sel de lithium et un degré de substitution des groupes acide carboxylique dérivés du premier monomère d'acide acrylique dans le copolymère à base d'acrylique par ses sels de lithium est ajusté à 40 % en mole à 80 % en mole du premier monomère d'acide acrylique,
le troisième monomère de (méth)acrylate comporte un groupe éthylène glycol et a un poids moléculaire moyen en poids (Mw) de 300 g/mol à 600 g/mol, dans laquelle le poids moléculaire moyen en poids (Mw) est déterminé par diffusion de lumière statique.

2. Électrode négative pour la batterie au lithium rechargeable selon la revendication 1, dans laquelle une quantité du troisième monomère est de 5 % en poids à 30 % en poids sur la base du total, 100 % en poids du premier monomère, du deuxième monomère, et du troisième monomère.

3. Électrode négative pour la batterie au lithium rechargeable selon l'une quelconque des revendications précédentes, dans laquelle le troisième monomère de (méth)acrylate est un monomère de polyéthylène glycol méthyl éther méthacrylate.

4. Électrode négative pour la batterie au lithium rechargeable selon l'une quelconque des revendications précédentes, dans laquelle le matériau actif négatif à base de silicium comporte du silicium et du carbone.

5. Batterie rechargeable au lithium (100), comportant :
une électrode négative (20) selon l'une quelconque des revendications précédentes ;
une électrode positive (10) ; et
un électrolyte.
